# EUROPÄISCHE PATENTSCHRIFT

(11) **EP 0 438 645 B1**
(45) Veröffentlichungstag und Bekanntmachung des Hinweises auf die Patenterteilung: **07.09.1994**
(21) Anmeldenummer: 90121088.0
(22) Anmeldetag: 03.11.1990
(51) Int. Cl.: B29C 47/76, B29C 47/42, B29B 7/84

(54) **Be- oder Entgasungseinrichtung für thermoplastische Kunststoffschmelzen**
Apparatus for treating with a gas or for degassing thermoplastic melts
Dispositif pour traiter par un gaz ou dégazer des matières thermoplastiques fondues

(30) Priorität: 24.01.1990 DE 4001988
(43) Veröffentlichungstag der Anmeldung: 31.07.1991
(73) Patentinhaber: HERMANN BERSTORFF Maschinenbau GmbH, D-30627 Hannover (Kleefeld) (DE)
(72) Erfinder: Müller, Werner, Dipl.-Ing., W-3000 Hannover 91 (DE)

(56) Entgegenhaltungen:
- DD-A- 102 636
- DE-A- 2 406 569
- DE-A- 2 521 774
- DE-A- 2 905 717
- DE-A- 3 030 541
- DE-A- 3 835 412
- GB-A- 2 151 152
- US-A- 3 986 709

## Beschreibung

Die Erfindung betrifft eine Be- oder Entgasungseinrichtung für thermoplastische Kunststoffschmelzen, entsprecnend der Gattung, wie beschrieben im Oberbegriff der Patentansprüche 1 bzw. 2.

Aus der US-PS 3,470,584 ist eine Entgasungseinrichtung bekannt, die zwischen zwei in Tademform zueinander angeordnete Extruder angeordnet ist. Das zu entgasende Material wird von dem ersten Extruder über einen federbelasteten Konus in dünne Schichten in einen Raum gefördert, der unter einem Unterdruck gesetzt wird. Durch den Unterdruck werden dann aus den dünnen Schichten Restmonomere und dergleichen flüchtige Stoffe aus der Schmelze entfertn. Danach wird die Schmelze dem zweiten Extruder zugeführt und weiterverarbeitet. Die Entgasungsleistung einer derart gestalteten Anlage ist gering, weil die Schaffung des dünnen Schmelzefilmes während der Extrusion in die Unterdruckkammer nur einen geringen Ausstoß zuläßt.

Aus der DE-PS 30 30 541 ist ein mehrwelliger Knetscheibenreaktor zur kontinuierlichen Herstellung von entgasten Polymeren bekannt. Um einen Entgasungsraum herum werden Förderwellen in Kreisform angeordnet, in der Art, daß jede Förderwelle mit den zu ihren beiden Seiten angeordneten Förderwellen kämmt, so daß sich auf den dem Entgasungsraum zugewandten Umfangsbereich der Förderwellen ein Schmelzefilm ausbildet. Da in dem Entgasungsraum ein Unterdruck herrscht, werden die Schmelzeschichten entgast.

Eine derart gestaltete Einrichtung weist eine große Schmelzeoberfläche (Fläche aller Wellenoberflächen, die dem Entgasungsraum zugewandt sind) auf und führt zu guten Entgasungsergebnissen. Die Einrichtung selbst ist jedoch hinsichtlich der Abdichtung des Entgasungsraumes und des Antriebes der einzelnen miteinander kämmenden Förderwellen schwer beherrschbar. Es sind beispielsweise eine Vielzahl einzelner Wellendichtungen für die stationär in einem Gehäuse angeordneten, sich drehenden Förderwellen erforderlich, wie in der EP-OS 0 208 139 näher erläutert wurde.

Es ist die Aufgabe der vorliegenden Erfindung, eine Be- oder Entgasungsvorrichtung vorzuschlagen, mit der eine große zu entgasende Oberfläche darstellbar ist, ohne daß bei der Einrichtung entsprechende Abdichtungsprobleme und insbesondere Antriebsprobleme der einzelnen Förderwellen auftreten. Die Einrichtung soll einfach in der Herstellung sein und sehr betriebssicher arbeiten.

Die Aufgabe wird durch die in den Patentansprüchen niedergelegten Merkmale auf zwei unabhängigen Wegen gelöst. Wenngleicn nachfolgend nur die Betriebsweise als Entgasungseinrichtung beschrieben wird, ist ebenso eine Begasung der Schmelzen möglich.

Auf dem ersten Lösungsweg wird durch die Anordnung einer Zentralspindel, die nur in ihrem unteren und oberen Abschnitt eine förderwirksame Schrägverzahnung aufweist, jedoch zwischen beiden Abschnitten eine Welle mit einem geringeren Durchmesser und ohne Verzahnung besitzt, in diesem Bereich ein freier mittiger Entgasungsraum geschaffen. Die Welle hat eine axiale Bohrung, die mit einer, einen Unterdruck erzeugenden Einrichtung verbunden ist. Weiterhin ist die axiale Wellenbohrung über Querbohrungen mit dem Entgasungsraum verbunden, so daß darin ein Unterdruck erzeugt werden kann.

Um den oberen und unteren Zentralspindelabschnitt und der Welle sind über die gesamte Länge Planetspindeln angeordnet. Die Planetspindeln kämmen mit einer förderwirksamen Innenverzahnung des Gehäuses. Zwischen den Planetspindeln sind gleichmässige Abstände freigelassen, so daß sich kleine Kammern ausbilden, die mit dem Entgasungsraum in Verbindung stehen.

Die Planetspindeln rotieren durch die Drehung der Zentralspindelabschnitte und führen gleichzeitig eine kreisförmig umlaufende Bewegung in dem Gehäuse durch.

Durch die abrollende Bewegung der über ihre gesamte Länge eine Verzahnung aufweisenden Planetspindeln, wird die unter Druck in das Gehäuse eingespeiste Schmelze zu sehr dünnen Schichten ausgewalzt, aus denen flüchtige Bestandteile dann leicht ausdiffundieren, weil zusätzlich ein Unterdruck in dem Gehäuse aufgebaut wird.

Die Abdichtung wird im Einspeisebereich durch eine Druckeinspeisung der Schmelze und im Austrittsbereich durch eine, an den unteren Zentralspindelabschnitt angeschlossene Austragsschnecke erreicht. Die Austragsschnecke baut einen Werkzeugdruck auf, beispielsweise für einen Granulator und dichtet somit den Entgasungsraum in diesem Bereich ab, so daß ein hoher Unterdruck gehalten werden kann.

Die erfindungsgemäß Entgasungseinrichtung hat folgende wesentliche Vorteile:
- es wird in der Einrichtung in dem Entgasungsraum eine sehr große Entgasungsfläche geschaffen,
- es werden sehr dünne Schmelzeschichten durch die Planetspindeln an der Innenwandung des Gehäuses bzw. in dem Zwickelbereich zwischen der verzahnten Spindel und der verzahnten Gehäusewandung geschaffen,
- die große Fläche der dünnen Schmelzeschichten wird in einem Raum geschaffen, in dem ein hoher Unterdruck aufgebaut werden kann, ohne daß eine Beeinträchtigung der Unterdruckleitungen und Pumpen befürchtet werden muß,
- je nach der axialen Länge bzw. dem Durchmesser des Gehäuses und der Zentralspindel sowie der Anzahl der Planetspindeln kann ein beliebig großer Entgasungsraum geschaffen werden, so daß der Durchsatz der Schmelze beliebig steuerbar ist, ohne daß Einbußen hinsichtlich des Entgasungseffektres selbst befürchtet werden müssen,
- es werden Entgasungsergebnisse erzielt, wie sie bislang kaum vorstellbar waren hinsichtlich ihres ppm-Gehaltes an z.B. Restmonomeren in einer Polyethylen- bzw. Kunststoffschmelze,
- es lassen sich erstmals auch hochviskose Schmelzen ausgezeichnet entgasen, weil alle Schmelzeteile vielmals in den Zwickelbereich zwischen den Planetspindeln und der Gehäuseinnenwandung gelangen und dort zu dünnen Schichten ausgewalzt werden. Da die Planetspindeln und die Gehäuseinnenwandung eine förderwirksame Verzahnung aufweisen, wird auch eine hochviskose Schmelze, die sonst kaum zu entgasen ist, gefördert und gelangt x-mal in den Zwickelbereich.

Ausführungsbeispiele der Erfindung werden in den Zeichnungen gezeigt und nachfolgend erläutert.

Es zeigen:

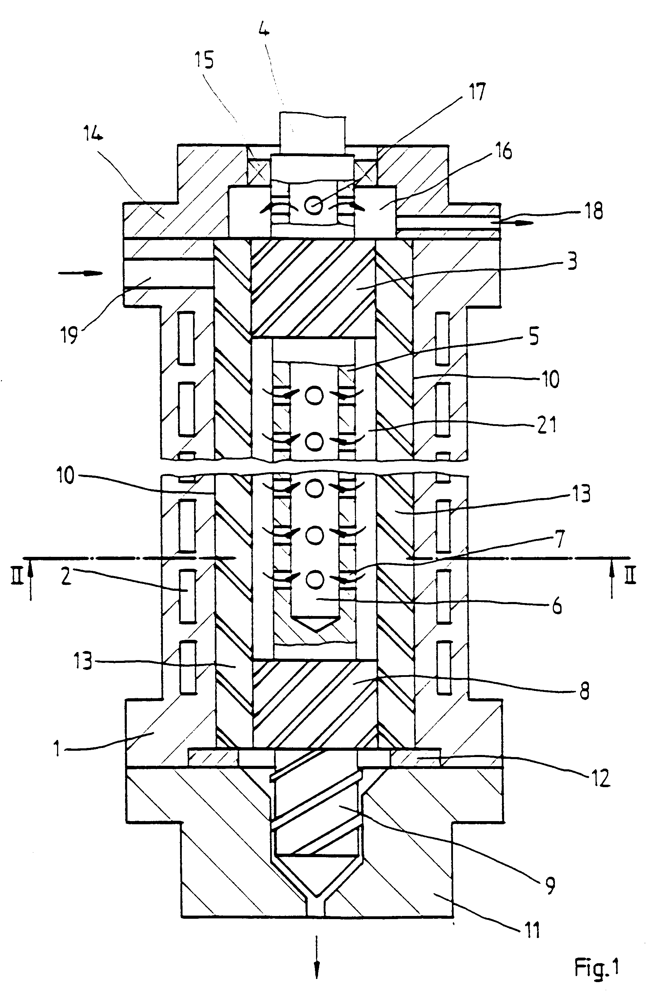

- Fig. 1: einen Längsschnitt durch eine Entgasungseinrichtung mit innen liegendem Entgasungsraum.
- Fig. 2: einen Querschnitt gemäß II-II in Fig. 1.
- Fig. 3: eine schematisiert dargestellte Extrusionsanlage mit einer Entgasungseinrichtung.
- Fig. 4: einen Längsschnitt durch eine Entgasungseinrichtung mit außen liegendem Entgasungsraum.
- Fig. 5: einen Querschnitt gemäß V - V in Fig. 4.

In einem senkrecht angeordneten Gehäuse 1 mit Temperierbohrungen 2 ist eine Zentralspindel 3 angeordnet, die mit einer Antriebswelle 4 verbunden ist.

Die Zentralspindel 3 weist an ihrem unteren Ende eine Welle 5 auf, mit einer axialen Längsbohrung 6 und damit in Verbindung stehende als Entgasungsöffnungen dienende Querbohrung 7 auf.

Die Welle 5 verbindet den obere Zentralspindelabschnitt 3 drehfest mit dem unteren Zentralspindelabschnitt 8, an der in axialer Weiterführung der Welle 5 und der Zentralspindeln 3 und 8 ein Austragsschneckenteil 9 drehfest befestigt ist.

Um die Zentralspindelabschnitte 3 und 8 sind in gleichmäßigen Abständen zueinander Planetspindeln 13 angeordnet, die eine mit der Schrägverzahnung der Zentralspindelabschnitte 3 und 8 kämmende Verzannung aufweisen. Die Innenwandung 10 des Gehäuses 1 weist ebenfalls eine mit den Planetspindeln 13 zusammenwirkende Schrägverzahnung auf.

Das Gehäuse 1 wird nach unten mittels eines angeflanschten Gehäuseabschlußteiles 11 abgedichtet, auf dem ein Anlaufring 12 für die Planetspindeln 13 angeordnet ist. Nach oben hin wird das Gehäuse 1 durch Abschlußteil 14 abgedichtet, in dem die Antriebswelle 4 in einem Lager 15 angeordnet ist.

In dem oberen Abschlußteil 14 ist um die Antriebswelle 4 herum ein Ringkanal 16 ausgebildet, der über Bohrungen 17 mit der Entgasungsbohrung 6 in Verbindung steht. An den Ringkanal 16 wird über den Anschlußflansch 18 eine nicht gezeigte Unterdruck erzeugende Einrichtung angeschlossen.

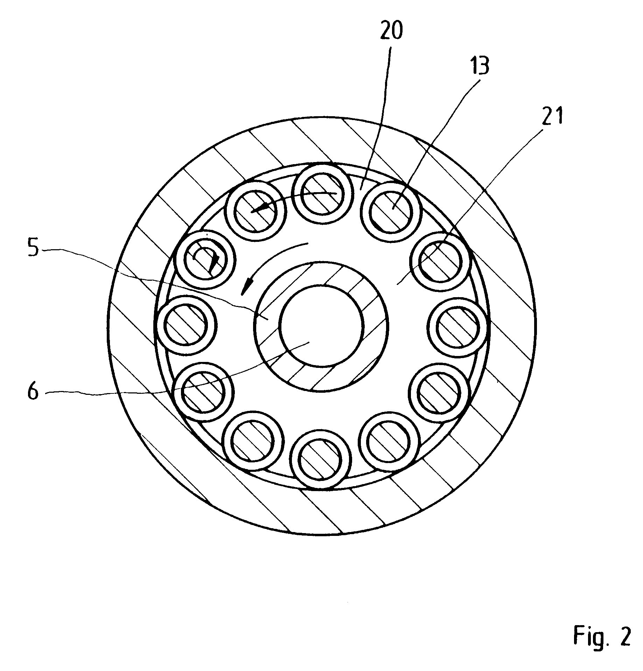

In den Schmelzezulaufkanal 19 wird eine unter Druck stehende Schmelze gefördert, die in die Zwischenräume 20 zwischen den Planetspindeln 13 gelangt (Fig. 2).

Die Planetspindeln 13 wälzen sich auf der Innenverzahnung 10 des Gehäuses 1 ab und erzeugen somit dünne Schmelzeschichten, aus denen durch den, in dem Entgasungsraum 21 erzeugten Unterdruck flüchtige Bestandteile ausdiffundieren und durch die Bohrung 7, der Längsbohrung 6, der Bohrung 17 und dem gebohrten Anschlußflansch aus dem Entgasungsraum 21 abgeführt werden.

Die an den Spindeloberflächen entgaste Schmelze wird von den Planetspindeln 13 zur Austragsschnecke 9 gefördert, die einen Werkzeugdruck für der Be- oder Entgasungseinrichtung nachgeschalteten Einrichtungen aufbaut.

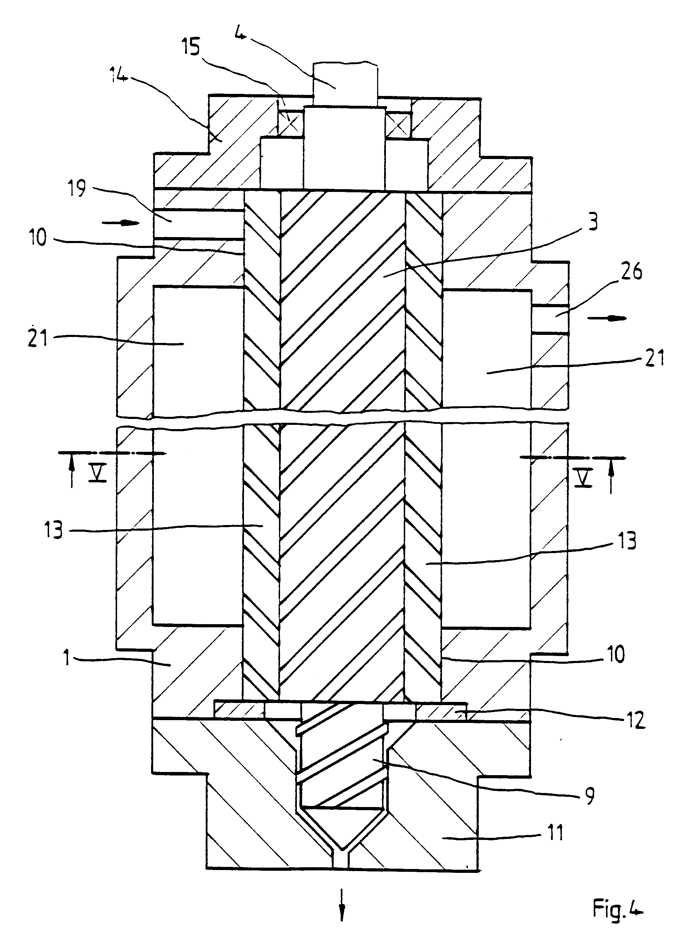

Fig. 4 zeigt eine Be- oder Entgasungseinrichtung, bei der in dem senkrecht angeordneten Gehäuse 1 eine Zentralspindel 3 angeordnet ist, die mit einer Antriebswelle 4 verbunden ist.

Die Zentralspindel 3 weist über ihre volle Länge eine Schrägverzahnung auf, in die die Schrägverzahnungen von Planetspindeln 13 kämmen. Diese Planetspindeln 13 umlaufen die Zentralspindel 3 in gleichmäßigen Abständen zueinander auf einer Kreisbahn rotierend.

Die Innenwandung des Gehäuses 1 weist im oberen und/oder unteren Abschnitt ebenfalls eine mit den Planetspindeln 13 zusammenwirkende Schrägverzahnung auf.

In einem mittleren Gehäuseabschnitt springt die Gehäuseinnenwandung zurück und bildet durch ihren Abstand zur Zentralspindel 3 und zu den Planetspindeln 13 einen Ent- oder Begasungsraum 21.

Das Gehäuse 1 wird nach unten mittels eines angeflanschten Gehäuseabschlußteiles 11 abgedichtet, auf dem ein Anlaufring 12 für die Planetspindeln 13 angeordnet ist. Nach oben hin wird das Gehäuse 1 durch ein Abschlußteil 14 abgedichtet, in dem die Antriebswelle 4 in einem Lager 15 angeordnet ist.

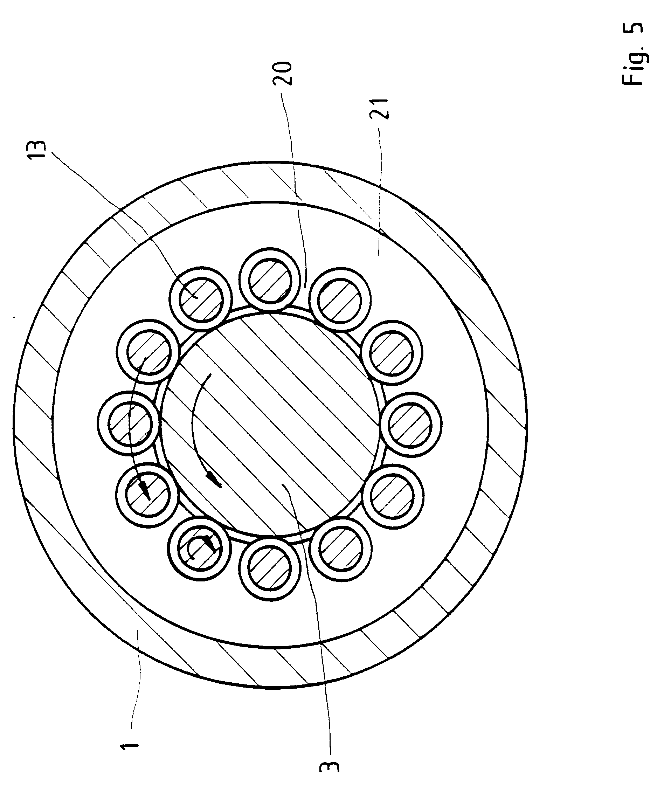

In den Schmelzezulaufkanal 19 wird eine unter Druck stehende Schmelze gefördert, die in die Zwischenräume 20 zwischen den Planetspindeln 13 gelangt (Fig. 5).

Die Planetspindeln 13 wälzen sich auf der Innenverzahnung 10 des Gehäuses 1 und der Schrägverzahnung der Zentralspindel 3 ab und erzeugen somit dünne Schmelzeschichten, aus denen durch den in dem Entgasungsraum 21 erzeugten Unterdruck flüchtige Bestandteile ausdiffundieren und durch den Anschlußflansch 26 über eine Vakuumpumpe 24 abgeführt werden.

Auch bei dieser Be- oder Entgasungseinrichtung wird die entgaste Schmelze zu einer Austragsschnecke 9 gefördert, die die Schmelze aus der Einrichtung herausdrückt.

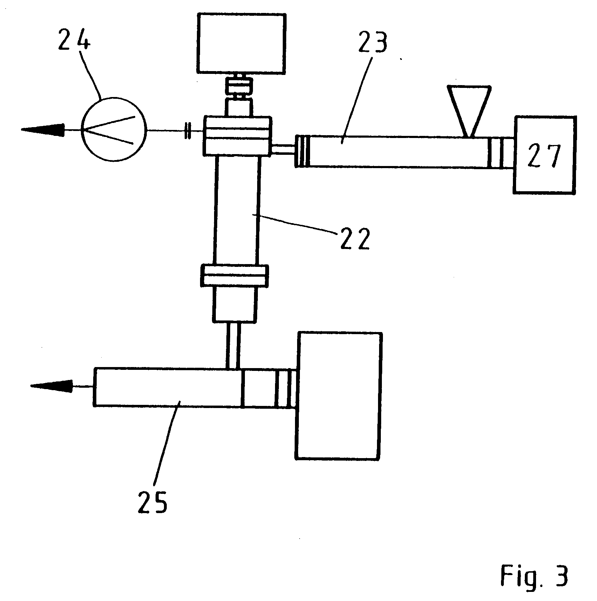

In Fig. 3 ist schematisiert dargestellt, wie die vorgestellten Be- oder Entgasungseinrichtungen in eine Extrusionsanlage jeweils einbindbar sind.

Der zu extrudierende thermoplastische Kunststoff wird in einem ersten, mit einem Antrieb 27 versehenen Schneckenextruder 23 schmelzeflüssig extrudiert, um dann in die Be- oder Entgasungseinrichtung 22 eingespeist zu werden. Hier wird die Schmelze entgast und zu einer weiteren Anlage 25 (z.B. einem weiteren Extruder oder einem Granulator) weitergefördert. Das aus der Schmelze diffundierte Gas wird über ein Ventil 28 von einer Vakuumpumpe 24 abgesaugt.

## Patentansprüche

1. Ent- oder Begasungseinrichtung für thermoplastische Kunststoffschmelzen, hochmolekulare Polymere oder andere zu entgasende oder begasende, flüssige Massen mit einem runden Gehäuse, an das eine Masseneinlaß- und -auslaßöffnung eingebracht ist,
**dadurch gekennzeichnet**:
daß in dem Gehäuse (1) koaxial eine nur in ihrem oberen und unteren Bereich eine Verzahnung aufweisende Zentralspindel (3) angeordnet ist,
daß der mittlere Teil der Zentralspindel (3) als im Durchmesser reduzierte, verzahnungsfreie, den oberen und/oder unteren Zentralspindelteil miteinander verbindende Welle (5) ausgebildet ist,
daß die Zentralspindel (3) und die Welle (5) eine an eine Über- oder Unterdruckeinrichtung (24) anschließbare, axiale Bohrung (6) aufweist,
daß die Welle (5) mit radialen, in einen Be- oder Entgasungsraum (21) führenden Bohrungen (7) ausgebildet ist, und
daß um die Zentralspindel (3) herum, in gleichmäßigen Abständen zueinander angeordnete, rotierende und in Kreisform umlaufende, mit der oberen und/oder unteren Verzahnung der Zentralspindel (3) und mit einer verzahnten Gehäuseinnenwandung kämmende Planetspindeln (13) angeordnet sind.

2. Be- oder Entgasungseinrichtung für thermoplaplastische, hochmolekulare Polymere oder andere zu be- oder entgasende flüssige Massen, mit einem runden Gehäuse, an das eine Masseneinlaß- und -auslaßöffnung eingebracht ist,
**dadurch gekennzeichnet**,
daß in dem Gehäuse (1) koaxial eine Zentralspindel (3) angeordnet ist,
daß um die Zentralspindel (3) herum, in gleichmäßigen Abständen zueinander angeordnete, rotierende und in Kreisform umlaufende sowie über ihre ganze Länge mit der Zentralspindel (3) kämmende Planetspindeln (13) angeordnet sind,
daß die Planetspindeln (13) in einem oberen und/oder unteren Abschnitt mit einer verzannten Gehäuseinnenwandung (10) kämmen, und
daß die Zentralspindel (3) und die Plantespindeln (13) in einem mittleren Gehäuseabschnitt von einem Entgasungsraum (21) umgeben sind.

3. Be- oder Entgasungseinrichtung nach Anspruch 2,
**dadurch gekennzeichnet**,
daß der Entgasungsraum (21) über einen Anschlußflansch (26) mit einer Be- oder Entgasungspumpe (24) verbunden ist.

4. Be- oder Entgasungseinrichtung nach Anspruch 1,
**dadurch gekennzeichnet**,
daß die Zentralspindel (3) über eine Länge von 1 bis 10 D (D = Durchmesser der zu kämmenden Zentralspindel) im Durchmesser reduziert ausgebildet ist.

5. Be- oder Entgasungseinrichtung gemäß Anspruch 1 und Anspruch 4,
**dadurch gekennzeichnet**,
daß die Bohrung (6) der Zentralspindel (3) und der Welle (5) oberhalb des Verzahnungsbereiches der Zentralspindel (3) über wenigstens eine radiale Entgasungsbohrung (17) mit einem Ringkanal (16) verbunden ist, und
daß der Ringkanal (16) über einen Anschlußflansch (18) an der Über- oder Unterdruckeinrichtung (24) angeschlossen ist.

6. Be- oder Entgasungseinrichtung gemäß den Ansprüchen 1 bis 5,
**dadurch gekennzeichnet**,
daß das Gehäuse (1) mit Temperierbohrungen (2) versehen ist.

7. Be- oder Entgasungseinrichtung gemäß den Ansprüchen 1 bis 6,
**dadurch gekennzeichnet**,
daß die Zentralspindel (3) an ihrem masseaustrittsseitigen Ende, dem unteren Verzahnungsbereich nachgeordnet, über eine Austragsschnecke (9) für die zu fördernde Masse verfügt.

## Claims

1. Degassing or gassing device for thermoplastic polymer melts, polymers of high molecular weight or other liquid materials to be degassed or gassed, with a round housing, that is provided with a material inlet and outlet opening
**characterized in that**
a central spindle (3) presenting a toothing in its upper and lower sections only is coaxially arranged within a housing (1),
that the centre part of the central spindle (3) is designed as a shaft (5) of a reduced diameter and without toothing which connects the upper and the lower spindle sections,
that the central spindle (3) and the shaft (5) are provided with an axial bore (6) that can be connected to an overpressure or vaccum device (24),
that the shaft (5) presents radial bores (7) which lead into a gassing or degassing chamber (21), and
that rotating planetary spindles (13) which mesh with the upper and lower toothing of the central spindle (3) and with the toothed internal housing wall, are arranged around the central spindle (3) at uniform distances between each other and move on a circular line.

2. Degassing or gassing device for thermoplastic polymers of high molecular weight or other liquid materials to be degassed or gassed, with a round housing, that is provided with a material inlet and outlet opening
**characterized in that**
a central spindle (3 )is coaxially arranged within a housing (1),
that rotating planetary spindles (13) being arranged at uniform distances between each other move on a circular line around the central spindle (3) and mesh over their entire length with the central spindle (3),
that in an upper and/or lower section, the planetary spindles (13) mesh with a toothed internal housing wall (10), and
that the central spindle (3) and the planetary spindles (13) are surrounded in a central section by a degassing chamber (21).

3. Gassing or degassing device as per claim 2,
**characterized in that**
the degassing chamber (21) is connected via a connecting flange (26) to a gassing or degassing pump (24).

4. Gassing or degassing device as per claim 1,
**characterized in that**
the central spindle (3) presents a reduced diameter over a length of 1 to 10 D (D = diameter of the meshing central spindle).

5. Gassing or degassing device as per claims 1 and 4,
**characterized in that**
the bore (6) of the central spindle (3) and the shaft (5) above the toothed section of the central spindle (3) is connected by at least one radial degassing bore (17) to an annular channel (16), and
that the annular channel (16) is connected via a connecting flange (18) to an overpressure or vacuum device (24).

6. Gassing or degassing device as per claims 1 to 5,
**characterized in that**
the housing (1) is provided with heating/cooling bores (2).

7. Gassing or degassing device as per claims 1 to 6,
**characterized in that**
the central spindle (3) is equipped at its material outlet end, that is arranged downstream of the lower toothing section, with a discharge screw (9) for the material to be conveyed.

## Revendications

1. Appareil pour le dégazage ou gazage de masses fondues thermoplastiques, polymères à haut poids moléculaire ou d'autres masses liquides à dégazer ou gazer avec un carter rond qui présente des ouvertures d'entrée et de sortie de la masse fondue,
**caractérisé en ce que**
une broche centrale (3) est arrangée coaxialement dans un carter (1) et ne comprend que dans les parties supérieure et inférieure une denture,
en ce que la partie du milieu de la broche centrale (3) est conçue comme arbre (5) qui a un diamètre réduit, ne présente aucune denture et relie la partie de broche centrale supérieure et/ou inférieure,
en ce que la broche centrale (3) et l'arbre (5) présentent un alésage axial qui peut être connecté à un dispositif à faire le vide ou à surpression (24), en ce que l'arbre (5) est pourvu d'alésages radiaux (7) menant dans une chambre de gazage ou dégazage 21, et
en ce que des broches planétaires (13) sont arrangées à une distance régulière entre elles et tournent sur une trajectoire circulaire autour de la broche centrale (3) et engrènent avec les dentures supérieure et/ou inférieure de la broche centrale (3) et avec une paroi intérieure dentée du carter.

2. Appareil de gazage ou dégazage pour des polymères thermoplastique à hauts poids moléculaire ou d'autres matières liquides à gazer ou dégazer avec un carter rond qui présente des ouvertures d'entrée et de sortie de la masse fondue,
**caractérisé en ce que**
une broche centrale (3) est arrangée coaxialement dans un carter (1),
en ce que des broches planétaires (13) sont arrangées à une distance régulière entre elles, tournent sur une trajectoire circulaire autour de la broche centrale (3) et engrènent sur toute leur longueur avec la broche centrale (3),
en ce que les broches planétaires (13) engrènent avec une paroi intérieure dentée du carter (10) dans une partie supérieure et/ou inférieure, et
en ce que la broche centrale (3) et les broches planétaires (13) sont entourées d'une chambre de dégazage (21) dans une partie centrale du carter.

3. Appareil de gazage ou dégazage selon revendication 2,
**caractérisé en ce que**
la chambre de dégazage (21) est reliée à une pompe de gazage ou dégazage (24) par l'intermédiaire d'une bride de raccordement (26).

4. Appareil de gazage ou dégazage selon revendication 1,
**caractérisé en ce que**
la broche centrale (3) est conçue sur une longueur de 1 à 10 D (D = diamètre de la broche centrale à engrener) avec un diamètre réduit.

5. Appareil de gazage ou dégazage selon revendication 1 et revendication 4,
**caractérisé en ce que**
l'alésage (6) de la broche centrale (3) et de l'arbre (5) au-desssus de la partie dentée de la broche centrale (3) est relié à un canal annulaire (16) par l'intermédiaire d'au moins un alésage de dégazage radial (17), et
en ce que le canal annulaire (16) est relié à un dispositif à vide ou à surpression (24) par l'intermédiaire d'une bride de raccordement (18).

6. Appareil de gazage ou dégazage selon les revendications 1 à 5,
**caractérisé en ce que**
le carter (1) est pourvu d'alésages de thermorégulation (2).

7. Appareil de gazage ou dégazage selon les revendications 1 à 6,
**caractérisé en ce que**
la broche centrale (3) comprend sur son extrémité côté sortie de masse et en aval de la partie dentée inférieure une vis de décharge (9) pour la matière à transporter.
